# EUROPEAN PATENT APPLICATION

(11) **EP 4 682 542 A1**
(43) Date of publication of application: **21.01.2026**
(21) Application number: 23927619.9
(22) Date of filing: 11.12.2023
(51) Int. Cl.: G01N 35/00

(54) **AUTOMATIC ANALYSIS DEVICE, CONTAINER STORAGE DEVICE, AND METHOD FOR OPENING AND CLOSING SAME**

(30) Priority: 15.03.2023 JP 2023041319
(71) Applicant: HITACHI HIGH-TECH CORPORATION, Tokyo 105-6409 (JP)
(72) Inventor: KUMAGAI Takahiro, Tokyo 105-6409 (JP); YAMASHITA Taichiro, Tokyo 105-6409 (JP); MURAMATSU Yoshiki, Tokyo 105-6409 (JP); OKUSA Takenori, Tokyo 105-6409 (JP)
(74) Representative: MERH-IP Matias Erny Reichl Hoffmann Patentanwälte PartG mbB
(86) International application number: PCT/JP2023/044262
(87) International publication number: WO 2024/190014

(57) **Abstract**

An automatic analyzer and a container storage device that are free from maintenance, that have high airtightness, and that have a long life, and an opening and closing method therefor are provided. The container storage device for storing containers each containing a liquid used in an automatic analyzer, includes: a storage portion configured to store the plurality of containers; a lid member configured to cover an opening horizontally formed on an upper surface of the storage portion; and an opening and closing mechanism configured to open and close the opening by moving the lid member. The opening and closing mechanism moves the lid member in a vertical direction while maintaining the lid member to be in such a posture that the lid member is parallel to the opening when the lid member is closer than a predetermined reference distance to the opening, and rotates the lid member around a rotation shaft provided horizontally to cause the lid member to retract from a position above the opening when the lid member is equal to or farther than the reference distance from the opening.

## Description

### Technical Field

The present invention relates to an automatic analyzer, a container storage device, and an opening and closing method thereof.

### Background Art

An analysis reagent and a quality control specimen used in a medical analyzer are stored in a storage portion of the analyzer for convenience improvement, and are carried out of the storage portion to an analysis unit or the like for use at the time of analysis of corresponding items or quality control. In the storage portion of such an analyzer, a shutter mechanism for ensuring cooling performance and preventing condensation inside is provided in a structural portion such as an opening for accessing the inside from the outside.

As a technique related to a container storage device in an analyzer of the related art, for example, a technique disclosed in PTL 1 has been known. PTL 1 discloses a cryopreservation device that includes a gas-phase cryopreservation container with a plurality of long magazines in a vertical direction arranged in parallel, the gas-phase cryopreservation container configured to store biological samples in sample containers held in a plurality of stages above and below in the magazines in a frozen state in a gas-phase atmosphere using liquefied gas as a coolant and a refrigerant, and that is configured to automatically performs loading and unloading work of the sample container into and from the cryopreservation container, the cryopreservation container having a vacuum insulation double structure, being formed with an opening in an upper surface, being provided with an opening and closing lid that opens and closes the opening, and including a cylindrical container body in which the liquefied gas is stored at a bottom and a turntable that supports the magazines rotatably around a vertical rotation shaft, the cryopreservation device comprising: a lid opening and closing device configured to open and close the opening and closing lid from an outside the container body; a rotation drive device configured to drive the rotation shaft of the turntable; a magazine elevating device configured to raise the magazine and perform lowering of the raised magazine from the outside the container body in a state where the opening and closing lid is opened; and a loading and unloading device configured to perform loading of the sample container into the magazine raised by the magazine elevating device or unloading of the sample container from the magazine from the outside of the container body, in which the rotation drive device includes a driven member attached to the rotation shaft of the turntable, a drive member disposed outside the container body in a state where the opening and closing lid is closed, and a drive connection unit configured to connect the drive member to the driven member through the opening in the state where the opening and closing lid is opened.

### Citation List

### Patent Literature

PTL 1: JP2017-013957A

### Summary of Invention

### Technical Problem

The storage portion for storing the analysis reagent and the quality control specimen is required to have high airtightness to stably store them for a long time, and it is also necessary to ensure accessibility to an inside of the storage portion to easily perform loading and unloading of the analysis reagent and the quality control specimen into and from the storage portion. Therefore, the shutter mechanism for achieving both airtightness and accessibility of the storage portion is provided in the opening used for access between the storage portion and the outside. In such a shutter mechanism, a sealing member is used between the opening and the shutter mechanism to ensure the tightness of the storage portion when the shutter mechanism is closed. A surface of the sealing member is worn by opening and closing operations of the shutter mechanism, and the airtightness of the storage portion deteriorates as the wear progresses. Therefore, to maintain high airtightness for a long time without maintenance, it is desirable to adopt a configuration in which rubbing against the sealing member does not occur when the shutter mechanism is opened and closed.

In the related art, the opening and closing lid that is opened and closed by the lid opening and closing device is provided. However, when the sealing member is used in a lid portion or a lid contact portion of the cryopreservation container and an installation height of a rotation shaft for opening and closing the lid portion is different from a contact surface of the sealing member, the sealing member is crushed or an operation component other than that in a vertical direction with respect to the sealing member is generated during an operation when the sealing member returns to its original position after being crushed, and the sealing member is worn.

The invention has been made in view of the above, and an object thereof is to provide an automatic analyzer, a container storage device, and an opening and closing method thereof, which are maintenance-free, have high airtightness, and have a long life.

### Solution to Problem

The present application includes a plurality of methods for solving the above problems, and for example, includes a container storage device for storing containers each containing a liquid used in an automatic analyzer, the container storage device including: a storage portion configured to store the plurality of containers; a lid member configured to cover an opening horizontally formed on an upper surface of the storage portion; and an opening and closing mechanism configured to open and close the opening by moving the lid member, in which the opening and closing mechanism moves the lid member in a vertical direction while maintaining the lid member to be in such a posture that the lid member is parallel to the opening when the lid member is closer than a predetermined reference distance to the opening, and rotates the lid member around a rotation shaft provided horizontally to cause the lid member to retract from a position above the opening when the lid member is equal to or farther than the reference distance from the opening.

### Advantageous Effects of Invention

According to the invention, a container storage device and an automatic analyzer, which are maintenance-free, have high airtightness, and have a long life can be provided.

### Brief Description of Drawings

[FIG. 1] FIG. 1 is a plan view schematically showing an overall configuration of an automatic analyzer.
[FIG. 2] FIG. 2 is a view showing a configuration and an operation state of a shutter mechanism according to a first embodiment, and is a cross-sectional view taken along a line A-A shown in FIG. 1 in a state (a close state) where the shutter mechanism is closed.
[FIG. 3] FIG. 3 is a view showing a configuration and an operation state of the shutter mechanism according to the first embodiment, and is a cross-sectional view taken along the line A-A shown in FIG. 1 in a state where the shutter mechanism is being opened and closed.
[FIG. 4] FIG. 4 is a view showing a configuration and an operation state of the shutter mechanism according to the first embodiment, and is a cross-sectional view taken along the line A-A shown in FIG. 1 in a state (an open state) where the shutter mechanism is opened.
[FIG. 5] FIG. 5 is a diagram showing an opening and closing operation of the shutter mechanism.
[FIG. 6] FIG. 6 is a view showing a configuration and an operation of the shutter mechanism according to a second embodiment, and is a cross-sectional view taken along the line A-A shown in FIG. 1 in a state (a close state) where the shutter mechanism is closed.
[FIG. 7] FIG. 7 is a view showing a configuration and an operation state of the shutter mechanism according to the second embodiment, and is a cross-sectional view taken along the line A-A shown in FIG. 1 in a state where the shutter mechanism is being opened and closed.
[FIG. 8] FIG. 8 is a view showing a configuration and an operation state of the shutter mechanism according to the second embodiment, and is a cross-sectional view taken along the line A-A shown in FIG. 1 in a state (an open state) where the shutter mechanism is opened.
[FIG. 9] FIG. 9 is a view showing a configuration and an operation state of the shutter mechanism according to a third embodiment, and is a cross-sectional view taken along the line A-A shown in FIG. 1 in a state (a close state) where the shutter mechanism is closed.
[FIG. 10] FIG. 10 is a view showing a configuration and an operation state of the shutter mechanism according to the third embodiment, and is a cross-sectional view taken along the line A-A shown in FIG. 1 in a state where the shutter mechanism is being opened and closed.
[FIG. 11] FIG. 11 is a view showing a configuration and an operation state of the shutter mechanism according to the third embodiment, and is a cross-sectional view taken along the line A-A shown in FIG. 1 in a state (an open state) where the shutter mechanism is opened.

### Description of Embodiments

Hereinafter, embodiments according to the invention will be described with reference to the drawings. In the embodiments, a specimen storage and transport device that stores and transports a quality control specimens is shown as an example of a container storage device, but the invention can also be applied to an automatic analyzer including a storage portion in which samples and reagents are stored.

### <First Embodiment>

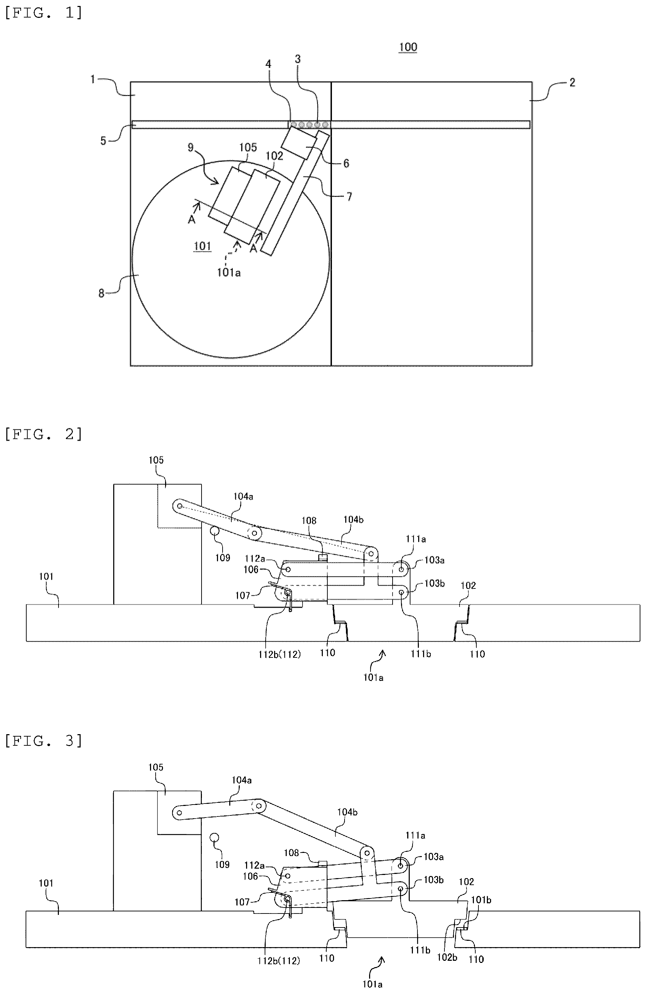

A first embodiment according to the invention will be described with reference to FIGS. 1 to 5.

FIG. 1 is a plan view schematically showing an overall configuration of an automatic analyzer according to the present embodiment.

In FIG. 1, an automatic analyzer 100 includes a specimen storage and transport device 1 as a specimen storage device including a storage portion 8 in which liquids used in an automatic analyzer 100 are stored, such as a quality control specimen, a specimen to be analyzed, a reagent for analysis, and a detergent for maintenance, and one or more analysis units 2 using these liquids. In the present embodiment, a case where the specimen storage and transport device 1 is connected to one analysis unit 2 to implement the automatic analyzer 100 will be described. In addition, a case where the quality control specimen is handled as the liquid stored in the specimen storage and transport device 1 will be described.

The specimen storage and transport device 1 schematically includes a rack transport mechanism 5 that transports a sample rack 4 on which a plurality of cylindrical specimen containers 3 containing the quality control specimens can be loaded, the storage portion 8 (a specimen storage mechanism) that stores the specimen containers 3, and a specimen container transport mechanism 6 that transports the specimen containers 3 between the sample rack 4 of the rack transport mechanism 5 and the storage portion 8.

The rack transport mechanism 5 is connected to the analysis unit 2, a specimen input unit (not shown), or the like, and moves the sample rack 4 on which the specimen container 3 is placed between the analysis unit 2 and the specimen input unit, thereby performing loading and unloading of the quality control specimen into and from the automatic analyzer 100 and transporting of the quality control specimen between the specimen storage and transport device 1 that stores the quality control specimen and the analysis unit 2 that measures the quality control specimen.

Although FIG. 1 shows the rack transport mechanism 5 having a configuration of transporting the sample rack 4 placed on a belt, the sample rack 4 may have a configuration of being moved by a gripping operation or a lifting operation. A transport disk that moves the specimen container 3 by rotation without using the sample rack 4 may be used as a transport mechanism for the quality control specimen.

The specimen container transport mechanism 6 has a function of gripping the specimen container 3, and performs transporting of the specimen container 3 between the sample rack 4 of the rack transport mechanism 5 and the storage portion 8 by moving along a specimen container transport mechanism base 7 while gripping the specimen container 3.

The storage portion 8 has an opening 101a for accessing the inside when the specimen container 3 is loaded and unloaded in a part of an upper surface (a storage portion upper surface 101) of a cover covering the storage portion 8, and a shutter mechanism 9 is provided in the opening 101a. The opening 101a of the storage portion 8 is provided horizontally to open vertically upward, and the shutter mechanism 9 includes a lid member 102 that covers and closes the opening 101a to hold the storage portion 8 in a sealed state, and an opening and closing mechanism that opens and closes the opening 101a by moving the lid member 102.

The specimen container 3 placed on the sample rack 4 and input into the specimen storage and transport device 1 from the specimen input unit by the rack transport mechanism 5 is taken out from the sample rack 4 by the specimen container transport mechanism 6, transported to the storage portion 8, and loaded into the storage portion 8 from the opening 101a after the opening 101a is opened by the shutter mechanism 9. After the specimen container 3 is loaded into the storage portion 8, the opening 101a is closed by the shutter mechanism 9.

When the specimen container 3 is transported from the specimen storage and transport device 1 to the analysis unit 2, after the opening 101a of the storage portion 8 is opened by the shutter mechanism 9, the specimen container 3 is unloaded from the storage portion 8 by the specimen container transport mechanism 6, transported to the rack transport mechanism 5, placed on the sample rack 4, and transported to the analysis unit 2. After the specimen container 3 is loaded into the storage portion 8, the opening 101a is closed by the shutter mechanism 9.

However, when the plurality of specimen containers 3 are continuously loaded or unloaded into or from the storage portion 8, the opening 101a may be kept open by the shutter mechanism 9 until a series of operations is completed.

Here, the shutter mechanism 9 of the storage portion 8 will be described in detail.

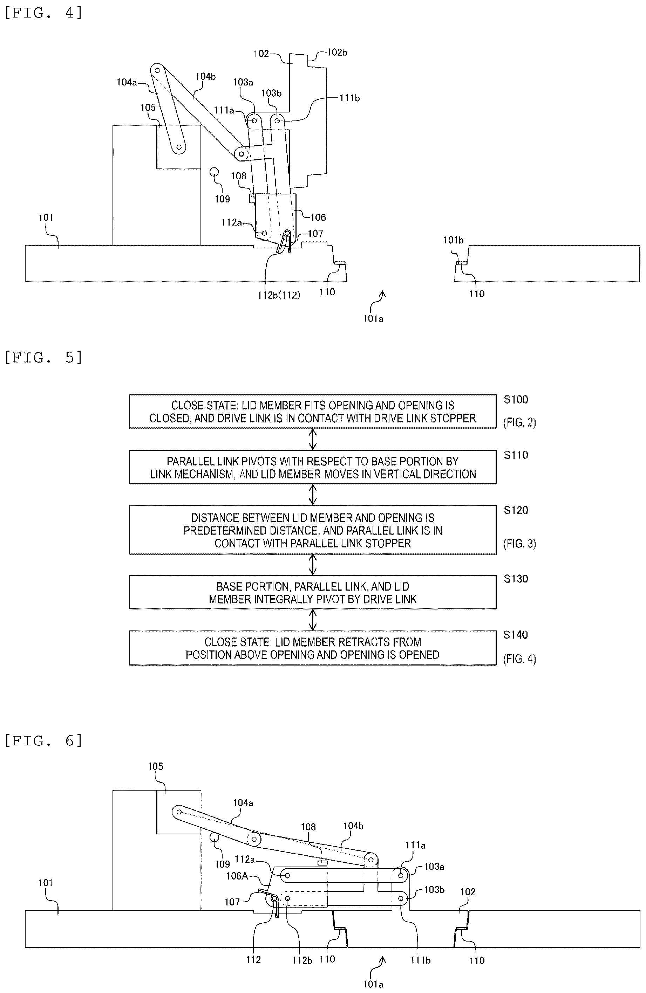

FIGS. 2 to 4 are views showing a configuration an operation state of the shutter mechanism and are cross-sectional views taken along a line A-A in FIG. 1. FIG. 2 shows a state (a closed state) where the shutter mechanism is closed, FIG. 3 shows a state during an opening and closing operation, and FIG. 4 shows a state (an open state) where the shutter mechanism is opened.

As shown in FIGS. 2 to 4, the shutter mechanism 9 has a function of sealing the opening 101a provided horizontally in the storage portion upper surface 101 forming the upper surface of the storage portion 8, and includes a lid member 102 that covers the opening 101a, parallel links 103a and 103b forming an opening and closing mechanism that opens and closes the opening 101a by moving the lid member 102, a drive link 104a, a driven link 104b, a drive unit 105, a base portion 106, a biasing member 107, a parallel link stopper 108, a drive link stopper 109, a sealing member 110, first support shafts 111a and 111b, and second support shafts 112a and 112b.

The lid member 102 is fitted into the opening 101a from above in a posture parallel to the opening 101a of the storage portion upper surface 101, and is formed to cover and close the opening 101a when an upward horizontal plane 101b formed around the opening 101a on the inner periphery of the opening 101a and a downward horizontal plane 102b formed around the lid member 102 on the outer periphery of the lid member 102 vertically come into contact with each other.

The sealing member 110 is disposed on the horizontal plane 101b of the opening 101a to surround the opening 101a. When the lid member 102 is fitted into the opening 101a, the sealing member is pressed from above and below by the downward horizontal plane 102b on the outer periphery of the lid member 102 and the upward horizontal plane 101b on the outer periphery of the opening 101a and is elastically crushed, thereby eliminating a gap between the lid member 102 and the opening 101a and further increasing a degree of airtightness of the storage portion 8. Here, the same effect can be obtained regardless of whether the sealing member 110 is disposed on the horizontal plane 101b of the opening 101a or on the horizontal plane 102b of the lid member 102. Examples of the sealing member 110 include a sponge-shaped member that is crushed in the state where the shutter mechanism 9 is closed to increase the degree of airtightness.

As described above, with a configuration in which the opening 101a and the lid member 102 are fitted to each other, there are advantages that the lid member 102 itself can exhibit a function as a heat-insulating material, and space can be saved. The lid member 102 may not be fitted into the opening 101a of the storage portion upper surface 101 as long as the lid member 102 can cover and seal the opening 101a in a posture parallel to the opening 101a.

The pair of first support shafts 111a and 111b are a pair of support shafts that are horizontal and parallel to each other, and are provided on the lid member 102 to be vertically apposed when the lid member 102 is in a posture parallel to the opening 101a (see FIGS. 2 and 3). Here, the first support shaft 111a is an upper support shaft, and the first support shaft 111b is a lower support shaft.

The pair of parallel links 103a and 103b each have one end pivotably supported by a corresponding one of the pair of first support shafts 111a and 111b, are disposed to be parallel to each other, and are formed to have equal lengths. Here, the parallel link 103a is disposed above, and the parallel link 103b is disposed below.

The base portion 106 is pivotably supported by a retraction support shaft 112 provided in parallel to the pair of first support shafts 111a and 111b. The present embodiment describes a case where the retraction support shaft 112 is common to the lower second support shaft 112b of the pair of second support shafts 112a and 112b. The base portion 106 is provided with the biasing member 107 that biases the base portion 106 toward the opening 101a side in a rotation direction (in other words, toward the storage portion upper surface 101 side), and the base portion 106 is rotated by the biasing force of the biasing member 107 and held at a position pressed against the storage portion upper surface 101 (hereinafter, referred to as a closed posture).

The pair of second support shafts 112a and 112b are a pair of support shafts that are horizontal, that are parallel to each other, and that pivotably support the other ends of the pair of parallel links 103a and 103b, and are provided on the base portion 106 to be vertically apposed when the base portion 106 is in a posture (the closed posture) in which the base portion 106 is rotated in the direction of the opening 101a. Here, the second support shaft 112a is an upper support shaft, and the second support shaft 112b is a lower support shaft. The base portion 106 is provided with the parallel link stopper 108 that restricts the relative movement of the parallel link 103a with respect to the base portion 106 from a predetermined position in an opening direction (a side opposite to the opening 101a).

The drive link 104a for transmitting a drive force from the drive unit 105 and the driven link 104b for transmitting the drive force transmitted via the drive link to the lid member 102 via the parallel links 103a and 103b form a link mechanism that converts the power caused by the drive unit 105 into the opening and closing operation of the lid member 102. In the link mechanism, one end of the drive link 104a is connected to a drive shaft of the drive unit 105 (for example, a drive motor), the other end of the drive link 104a is pivotably connected to one end of the driven link 104b, and the other end of the driven link 104b is pivotably connected to the parallel link 103b. The drive link stopper 109 which restricts the downward rotation of the drive link 104a in a predetermined state where a connection portion between the drive link 104a and the driven link 104b is located below a straight line connecting both ends of the link mechanism is provided on a lower side of the drive link 104a.

Operations according to the present embodiment having the configuration described above will be described.

FIG. 5 is a diagram showing an opening and closing operation of the shutter mechanism. FIG. 5 shows a case where the shutter mechanism 9 operates between a state where the opening 101a is closed (closed state) and a state where the opening 101a is opened (open state).

First, an operation in which the shutter mechanism 9 transitions from the closed state (S100 in FIG. 5) to the open state (S140 in FIG. 5) will be described.

In the closed state (S100 in FIG. 5) of the shutter mechanism 9, as shown in FIG. 2, the lid member 102 is fitted into the opening 101a. In this state, the drive link 104a is in contact with the drive link stopper 109, the base portion 106 is held in a posture of being in contact with the storage portion upper surface 101, and the base portion 106 has a posture in which there is a certain gap between the parallel link stopper 108 and the parallel link 103a. At this time, since a state where the parallel link 103b is pressed downward by the link mechanism (the drive link 104a and the driven link 104b) is maintained, the lid member 102 is pressed toward the opening 101a side (in a vertically downward direction).

When the drive force generated by the drive unit 105 is transmitted from the closed state (FIG. 2) to the parallel link 103b via the link mechanism (the drive link 104a and the driven link 104b), the base portion 106 is maintained in a posture of being in contact with the storage portion upper surface 101 by the biasing force of the biasing member 107, whereas since the operations of the parallel links 103a and 103b are not transmitted to the base portion 106, the parallel links 103a and 103b are rotated upward about the second support shafts 112a and 112b of the base portion 106 while being kept parallel to each other, and the lid member 102 is moved vertically upward while being maintained in a posture of being parallel to the opening 101a (S110 in FIG. 5).

When the lid member 102 is further moved vertically upward and a distance between the lid member 102 and the opening 101a reaches a predetermined reference distance (S120 in FIG. 5), the parallel link 103a comes into contact with the parallel link stopper 108 of the base portion 106 from below as shown in FIG. 3. A clearance (a reference distance) between the parallel link 103a and the parallel link stopper 108 may be larger than a distance (for example, 3 mm) by which the horizontal plane 102b of the lid member 102 is completely separated from the sealing member 110 of the horizontal plane 101b of the opening 101a when the parallel link 103a and the parallel link stopper 108 are in contact with each other. Specifically, for example, when the sealing member 110 having a height of 6 mm (at the time of release) is crushed to 3 mm by the lid member 102 and the opening 101a in the closed state and a distance between the first support shafts 111a and 111b and the second support shafts 112a and 112b of the parallel links 103a and 103b is 90 mm, since a vertical upward movement distance of the lid member 102 when the lid member 102 separates from the sealing member 110 is 3 mm, a movement distance of the lid member 102 in a horizontal direction during this period is 0.05 mm. That is, when the lid member 102 and the sealing member 110 are separated from each other, it can be considered that no movement of the lid member 102 occurs in the horizontal direction, which may cause wear on the sealing member 110.

When the parallel links 103a and 103b are further rotated upward by the drive force of the drive unit 105 via the link mechanism (the drive link 104a and the driven link 104b) in a state where the parallel link 103a and the parallel link stopper 108 are in contact with each other, the drive force of the drive unit 105 is transmitted to the base portion 106 via the parallel link stopper 108, the base portion 106, the parallel links 103a and 103b, and the lid member 102 are integrally rotated upward about the second support shaft 112b (the retraction support shaft 112) against the biasing force of the biasing member 107 set to be less than the drive force of the drive unit 105 (S130 in FIG. 5), and the lid member 102 is retracted from above the opening 101a as shown in FIG. 4 to be in the open state where the opening 101a is opened ( S140 in FIG. 5).

During the rotation operations between the states S120 to S140, the biasing force by the biasing member 107 acts in a direction of pressing the base portion 106 against the parallel link 103a. Therefore, the parallel link 103a and the parallel link stopper 108 are not separated from each other during the rotation operations, and a degree of freedom of the parallel links 103a and 103b with respect to the base portion 106 is not generated. Accordingly, the shutter mechanism 9 enables stable rotation movement. In a state where an opening operation is completed, a structure of the shutter mechanism 9 such as the lid member 102 is not present on a projection surface of the opening 101a of the storage portion upper surface 101, and an operation of loading and unloading the specimen container 3 into and from the storage portion 8 can be easily performed from above the opening 101a.

Next, an operation in which the shutter mechanism 9 transitions from the open state (S140 in FIG. 5) to the closed state (S100 in FIG. 5) will be described. In this case, the operations are reversed to those in the case of shifting from the closed state (S100 in FIG. 5) to the open state (S140 in FIG. 5).

That is, since the biasing force by the biasing member 107 acts in a direction in which the parallel link stopper 108 is pressed against the parallel link 103a via the base portion 106 in the vicinity of the storage portion, the shutter mechanism 9 performs the rotation movement about the second support shaft 112b while maintaining a mutual positional relationship in a state where the parallel link 103a is in contact with the parallel link stopper 108 (S140 and S130 in FIG. 5). Thereafter, when the storage portion upper surface 101 and the base portion 106 come into contact with each other in the vicinity of the storage portion 8 (S120 in FIG. 5), the position of the base portion 106 is maintained, and the parallel link 103a is separated from the parallel link stopper 108, whereby the lid member 102 transitions to a downward operation in the vertical direction by the parallel links 103a and 103b (S110 in FIG. 5), the lid member 102 is fitted into the opening 101a from the vertically upward direction, a state where the parallel link 103b is pressed downward by the link mechanism (the drive link 104a and the driven link 104b) is maintained, and the lid member 102 is pressed toward the opening 101a side (vertically downward direction) (S100 in FIG. 5).

As described above, in the case of shifting to the closed state (S100 in FIG. 5), even in the step of crushing the sealing member 110 to increase the sealing force, since the force in the horizontal direction is not applied to the sealing member 110, the occurrence of wear can be prevented. The lid member 102 moves to a position where the drive link 104a is in contact with the drive link stopper 109. It is desirable to set a position of the drive link stopper 109 such that a common axis of the drive link 104a and the driven link 104b is located below a straight line connecting axes of the other ends of the drive link 104a and the driven link 104b. Accordingly, the drive link 104a and the driven link 104b stop in a state of pressing the lid member 102 downward via the parallel link 103a, and the airtightness of the storage portion 8 can be further improved.

Effects of the present embodiment having the configuration described above will be described.

In general, a shutter mechanism for achieving both airtightness and accessibility of a storage portion is provided in an opening used for access between the storage portion and an outside. In such a shutter mechanism, a sealing member is used between the opening and the shutter mechanism to ensure the tightness of the storage portion when the shutter mechanism is closed. As the sealing member, a sponge-shaped member that is crushed in the state where the shutter mechanism is closed to increase the airtightness is generally used, but wear may occur on the surface of such a member due to rubbing, and a sealing performance may deteriorate. That is, the surface is worn by opening and closing operations of the shutter mechanism, and the airtightness of the storage portion deteriorates as the wear progresses.

In contrast, in the present embodiment, the storage device (the specimen storage and transport device 1) that stores a container containing a liquid used in the automatic analyzer 100 includes the storage portion 8 capable of storing a plurality of containers, the lid member 102 that covers the opening 101a provided horizontally on the upper surface of the storage portion 8, and the opening and closing mechanism that opens and closes the opening 101a by moving the lid member 102, the opening and closing mechanism moves the lid member 102 in the vertical direction while maintaining a posture of being parallel to the opening 101a when the lid member 102 is closer than a predetermined reference distance to the opening 101a, and rotates the lid member 102 around a rotation shaft provided horizontally to cause the lid member 102 to retract from a position above the opening 101a when the lid member 102 is equal to or farther than the reference distance from the opening, whereby it is possible to prevent rubbing of the sealing member 110 when the shutter mechanism 9 is opened and closed, and it is possible to achieve high airtightness and a long life without maintenance.

The shutter mechanism 9 is a system having a plurality of degrees of freedom of the upward movement and the rotation movement, but since the shutter mechanism 9 is implemented such that the operations in the plurality of degrees of freedom do not occur at the same time, that is, the operable portion is switched by the rotation position of the mechanism, the operation can be appropriately controlled, and the stable operation can be performed.

### <Second Embodiment>

A second embodiment according to the invention will be described with reference to FIGS. 6 to 8.

The present embodiment shows a case where a support shaft for rotation of the base portion 106 with respect to the storage portion upper surface 101 according to the first embodiment is provided separately from the second support shaft 112b.

In the present embodiment, differences from the first embodiment will be mainly described. In the drawings used in the present embodiment, the same members as those in the first embodiment are denoted by the same reference numerals, and descriptions thereof will be omitted as appropriate.

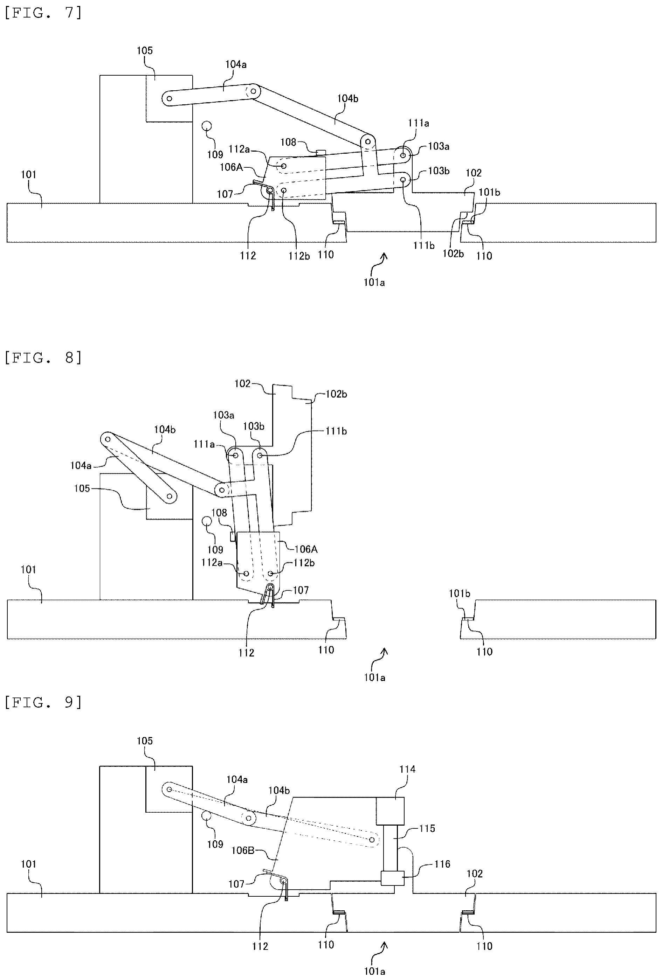

FIGS. 6 to 8 are views showing a configuration and an operation state of a shutter mechanism according to the present embodiment, and are cross-sectional views taken along the line A-A in FIG. 1. FIG. 6 shows a state (a closed state) where the shutter mechanism is closed, FIG. 7 shows a state during an opening and closing operation, and FIG. 8 shows a state (an open state) where the shutter mechanism is opened.

As shown in FIGS. 6 to 8, the shutter mechanism 9 has a function of sealing the opening 101a provided horizontally in the storage portion upper surface 101 forming the upper surface of the storage portion 8, and includes the lid member 102 that covers the opening 101a, the parallel links 103a and 103b forming the opening and closing mechanism that opens and closes the opening 101a by moving the lid member 102, the drive link 104a, the driven link 104b, the drive unit 105, a base portion 106A, the biasing member 107, the parallel link stopper 108, the drive link stopper 109, the sealing member 110, first support shafts 111a and 111b, the second support shafts 112a and 112b, and the retraction support shaft 112.

The base portion 106 is pivotably supported by the retraction support shaft 112 provided in parallel to the pair of first support shafts 111a and 111b. The present embodiment describes a case where the retraction support shaft 112 is different from the lower second support shaft 112b of the pair of second support shafts 112a and 112b. The base portion 106A is provided with the biasing member 107 that biases the base portion 106A toward the opening 101a side in a rotation direction (in other words, toward the storage portion upper surface 101 side), and the base portion 106A is rotated by the biasing force of the biasing member 107 and held at a position pressed against the storage portion upper surface 101 (hereinafter, referred to as a closed posture).

Other configurations are the same as those of the first embodiment.

Operations according to the present embodiment having the configuration described above will be described.

In the closed state (FIG. 6) of the shutter mechanism 9, the lid member 102 is fitted into the opening 101a.

When the drive force generated by the drive unit 105 is transmitted from the closed state (FIG. 6) to the parallel link 103b via the link mechanism (the drive link 104a and the driven link 104b), the parallel links 103a and 103b are rotated upward about the second support shafts 112a and 112b of the base portion 106A while keeping parallel to each other, and the lid member 102 is moved vertically upward while being maintained in a posture of being parallel to the opening 101a.

When the lid member 102 is further moved vertically upward and a distance between the lid member 102 and the opening 101a reaches a predetermined reference distance (FIG. 7), the parallel link 103a comes into contact with the parallel link stopper 108 of the base portion 106 from below.

In a state where the parallel link 103a and the parallel link stopper 108 are in contact with each other, when the parallel links 103a and 103b are further rotated upward by the drive force of the drive unit 105 via the link mechanism (the drive link 104a and the driven link 104b), the drive force of the drive unit 105 is transmitted to the base portion 106A via the parallel link stopper 108, the base portion 106A, the parallel links 103a and 103b, and the lid member 102 are integrally rotated upward against the biasing force of the biasing member 107 set to be less than the drive force of the drive unit 105, and the lid member 102 is retracted from above the opening 101a to be in the open state (FIG. 8) where the opening 101a is opened.

The operation of shifting the shutter mechanism 9 from the open state (FIG. 8) to the closed state (FIG. 6) is reversed to that in the case of shifting from the closed state (FIG. 6) to the open state (FIG. 8).

In the present embodiment having the configuration described above, the same effect as that in the first embodiment can also be obtained.

In the present embodiment, while retaining the same function as that in the first embodiment, there is no restriction that the second support shaft 112b that supports the parallel link 103b and the retraction support shaft 112 that retracts and moves the lid member 102 upward while rotating and moving the lid member 102 needs to be the same location, and therefore the rotation shafts of the parallel links 103a, 103b and the lid member 102 can be freely set, and design constraints can be relaxed.

### <Third Embodiment>

A third embodiment of the invention will be described in detail with reference to FIGS. 9 to 11.

The present embodiment shows a case where the movement of the lid member 102 in the vicinity of the storage portion 8 is performed by an independent drive unit 114 or the like instead of by the parallel links 103a and 103b in the first embodiment.

In the present embodiment, differences from the first embodiment will be mainly described. In the drawings used in the present embodiment, the same members as those in the first embodiment are denoted by the same reference numerals, and descriptions thereof will be omitted as appropriate.

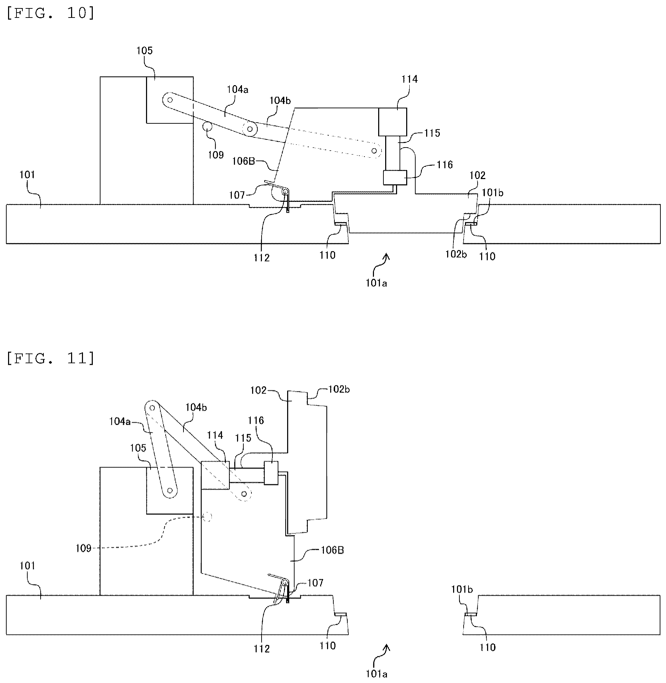

FIGS. 9 to 11 are views showing a configuration and an operation state of a shutter mechanism according to the present embodiment, and are cross-sectional views taken along the line A-A in FIG. 1. FIG. 9 shows a state (a closed state) where the shutter mechanism is closed, FIG. 10 shows a state during an opening and closing operation, and FIG. 11 shows a state (an open state) where the shutter mechanism is opened.

As shown in FIGS. 9 to 11, the shutter mechanism 9 has a function of sealing the opening 101a provided horizontally in the storage portion upper surface 101 forming the upper surface of the storage portion 8, and includes the lid member 102 that covers the opening 101a, a base portion 106B forming an opening and closing mechanism that opens and closes the opening 101a by moving the lid member 102, the independent drive unit 114, a linear motion guide 115, and a lid holder 116.

The base portion 106B is pivotably supported by the retraction support shaft 112. The base portion 106B is provided with the biasing member 107 that biases the base portion 106B toward the opening 101a side in a rotation direction (in other words, toward the storage portion upper surface 101 side), and the base portion 106B is rotated by the biasing force of the biasing member 107 and held at a position pressed against the storage portion upper surface 101 (hereinafter, referred to as a closed posture).

The base portion 106B is provided with the independent drive unit 114, the linear motion guide 115, and the lid holder 116. The linear motion guide 115 guides a movement direction of the lid holder 116 and is disposed along the vertical direction when the base portion 106B is in the closed posture. The lid member 102 is fixed to the lid holder 116, and when the base portion 106 is in the closed posture, the lid holder is moved in the vertical up-down direction along the linear motion guide 115 by the drive force from the independent drive unit 114, thereby moving the lid member 102 in the vertical up-down direction. In the present embodiment, a case where a motor is used as the independent drive unit 114 will be described as an example, but the invention is not limited thereto, and, for example, a linear motion solenoid may be used as the independent drive unit 114 and the linear motion guide 115.

The drive link 104a for transmitting the drive force from the drive unit 105 and the driven link 104b for transmitting the drive force transmitted via the drive link to the lid member 102 via the base portion 106B form a link mechanism that converts the power caused by the drive unit 105 into the opening and closing operation of the lid member 102. In the link mechanism, one end of the drive link 104a is connected to a drive shaft of the drive unit 105 (for example, a drive motor), the other end of the drive link 104a is pivotably connected to one end of the driven link 104b, and the other end of the driven link 104b is pivotably connected to the base portion 106B. The drive link stopper 109 which restricts the downward rotation of the drive link 104a in a predetermined state where a connection portion between the drive link 104a and the driven link 104b is located below a straight line connecting both ends of the link mechanism is provided on a lower side of the drive link 104a.

Other configurations are the same as those of the first embodiment.

Operations according to the present embodiment having the configuration described above will be described.

In the closed state (FIG. 9) of the shutter mechanism 9, the lid member 102 is fitted into the opening 101a.

When the drive force generated by the independent drive unit 114 is transmitted to the lid holder 116 from the closed state (FIG. 9), the lid member 102 is moved vertically upward while maintaining a posture of being parallel to the opening 101a.

The lid member 102 is further moved vertically upward by the drive force of the independent drive unit 114, and a distance between the lid member 102 and the opening 101a reaches a predetermined reference distance (FIG. 10).

When the distance between the lid member 102 and the opening 101a reaches a predetermined reference distance, the base portion 106B, the base portion 106B, the independent drive unit 114, the linear motion guide 115, the lid holder 116, and the lid member 102 integrally rotate upward by the drive force of the drive unit 105 via the link mechanism (the drive link 104a and the driven link 104b) against the biasing force of the biasing member 107 set to be less than the drive force of the drive unit 105, and the lid member 102 is retracted from above the opening 101a to be in the open state (FIG. 11) where the opening 101a is opened.

The operation of shifting the shutter mechanism 9 from the open state (FIG. 11) to the closed state (FIG. 9) is reversed to that in the case of shifting from the closed state (FIG. 9) to the open state (FIG. 11).

In the present embodiment having the configuration described above, the same effect as that in the first embodiment can also be obtained.

### <Appendix>

The invention is not limited to the embodiments described above and includes various modifications and combinations without departing from the gist of the invention. The invention is not limited to having all configurations described in the embodiments described above and includes a configuration in which a part of the configurations is deleted. Some or all of configurations, functions, and the like described above may be implemented by, for example, designing with an integrated circuit. In addition, the configurations, functions, and the like described above may be implemented by software by a processor interpreting and executing a program for implementing each function.

### Reference Signs List

1: specimen storage and transport device
2: analysis unit
3: specimen container
4: sample rack
5: rack transport mechanism
6: specimen container transport mechanism
7: specimen container transport mechanism base
8: storage portion
9: shutter mechanism
100: automatic analyzer
101: upper surface of storage portion
101a: opening
101b: horizontal plane
102: lid member
102b: horizontal plane
103a, 103b: parallel link
104a: drive link
104b: driven link
105: drive unit
106, 106A, 106B: base portion
107: biasing member
108: parallel link stopper
109: drive link stopper
110: sealing member
111a, 111b: first support shaft
112: retraction support shaft
112a, 112b: second support shaft
114: independent drive unit
115: linear motion guide
116: lid holder

## Claims

1. A container storage device for storing containers each containing a liquid used in an automatic analyzer, the container storage device comprising:
a storage portion configured to store the plurality of containers;
a lid member configured to cover an opening horizontally formed on an upper surface of the storage portion; and
an opening and closing mechanism configured to open and close the opening by moving the lid member, wherein
the opening and closing mechanism
moves the lid member in a vertical direction while maintaining the lid member to be in such a posture that the lid member is parallel to the opening when the lid member is closer than a predetermined reference distance to the opening, and
rotates the lid member around a rotation shaft provided horizontally to cause the lid member to retract from a position above the opening when the lid member is equal to or farther than the reference distance from the opening.

2. The container storage device according to claim 1, wherein
the opening and closing mechanism includes:
a pair of first support shafts that are horizontal, that are parallel to each other, and that are provided on the lid member in a manner of being vertically apposed when the lid member is in a posture parallel to the opening;
a pair of parallel links that each have one end rotatably supported by a corresponding one of the pair of first support shafts, that are disposed parallel to each other, and that have equal lengths;
a base portion pivotably supported by a retraction support shaft provided parallel to the pair of first support shafts;
a biasing member configured to bias the base portion toward the opening; and
a pair of second support shafts that are horizontal, that are parallel to each other, that are each configured to pivotably support a corresponding one of the other ends of the pair of parallel links, and that are provided on the base portion in a manner of being vertically apposed when the base portion is in a posture of being pivoted toward the opening.

3. The container storage device according to claim 2, wherein
a lower support shaft of the pair of second support shafts and the retraction support shaft are common.

4. The container storage device according to claim 2, wherein
the base portion includes a stopper configured to restrict pivoting of the parallel links with respect to the base portion when the lid member is separated from the opening beyond the reference distance, and
the base portion integrally pivots together with the lid member and the parallel link on the second support shafts when the lid member moves in a direction away from the opening beyond the reference distance.

5. The container storage device according to claim 1, wherein
the opening and closing mechanism includes:
a link mechanism including a drive link configured to transmit a drive force from a drive unit and a driven link configured to transmit the drive force transmitted via the drive link to the lid member, and
in a state where the opening is closed by the lid member, a connection portion between the drive link and the driven link is located below a straight line connecting both ends of the link mechanism.

6. An automatic analyzer comprising:
the container storage device according to claim 1;
a container transport mechanism configured to transport the container containing the liquid from the storage portion of the container storage device through the opening;
a rack transport mechanism configured to transport a rack on which the container is mounted; and
an analysis unit using the liquid that is contained in the container transported by the rack transport mechanism.

7. An opening and closing method for a container storage device including a storage portion configured to store a plurality of containers each containing a liquid used in an automatic analyzer, a lid member configured to cover an opening horizontally formed on an upper surface of the storage portion, and an opening and closing mechanism configured to open and close the opening by moving the lid member, the opening and closing method comprising:
a step of moving the lid member in a vertical direction while maintaining the lid member to be in such a posture that the lid member is parallel to the opening when the lid member is closer than a predetermined reference distance to the opening; and
a step of rotating the lid member around a rotation shaft provided horizontally to cause the lid member to retract from a position above the opening when the lid member is equal to or farther than the reference distance from the opening.
